(19) Europäisches Patentamt
European Patent Office
Office européen des brevets

(11) **EP 4 407 338 A1**

(12) **EUROPEAN PATENT APPLICATION**

(43) Date of publication:
**31.07.2024 Bulletin 2024/31**

(21) Application number: **23194689.8**

(22) Date of filing: **31.08.2023**

(51) International Patent Classification (IPC):
**G01S 7/03** (2006.01) **G01S 13/34** (2006.01)
**G01S 13/87** (2006.01) **G01S 13/88** (2006.01)

(52) Cooperative Patent Classification (CPC):
**G01S 7/03; G01S 13/343; G01S 13/87;
G01S 13/887**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.01.2023 JP 2023008746**

(71) Applicant: **KABUSHIKI KAISHA TOSHIBA
Minato-ku
Tokyo 105-0023 (JP)**

(72) Inventor: **YOSHIDA, Hiroshi
Minato-ku, Tokyo, 105-0023 (JP)**

(74) Representative: **Hoffmann Eitle
Patent- und Rechtsanwälte PartmbB
Arabellastraße 30
81925 München (DE)**

(54) **RADAR DEVICE**

(57) According to one arrangement, a radar device includes an oscillator (12) configured to generate a reference signal, a first unit group, and a second unit group. The first unit group includes first and second units ($10_{1,1}$, $10_{2,1}$) configured to transmit/receive based on a reference signal. The second unit group includes third and fourth units ($10_{1,2}$, $10_{2,2}$) configured to transmit/receive based on the reference signal. The first and third units ($10_{1,1}$, $10_{1,2}$) are connected to the oscillator (12) via first and second signal lines (L1, L2), respectively. The second and fourth units ($10_{2,1}$, $10_{2,2}$) are connected to the first and third units ($10_{1,1}$, $10_{1,2}$) via third and fourth signal lines, respectively.

FIG. 1

**Description**

FIELD

The present disclosure relates to a radar device.

BACKGROUND

There is a multi-input and multi-output (MIMO) radar device which includes a plurality of transmitters/receivers. The receivers simultaneously receives electromagnetic waves.

In a conventional MIMO radar device, a local oscillation signal from a local oscillator is supplied to a plurality of transmitters/receivers via cables. The transmitter transmits an electromagnetic wave based on the local oscillation signal. An antenna receives a reflected electromagnetic wave and outputs a radio frequency signal. The receiver converts the radio frequency signal into an intermediate frequency signal using the local oscillation signal. The radar device combines signals obtained by a plurality of receivers to detect an inspection target.

When a plurality of local oscillation signals supplied to a plurality of receivers are not in phase, the intermediate frequency signals are not in phase either. The detection accuracy of the radar device is low. To cause the local oscillation signals in a plurality of receivers to be in phase, it is necessary to equalize the cable lengths from the local oscillator to a plurality of receivers. Installation of cables of an equal length is cumbersome. This increases the manufacturing cost of the radar device.

To avoid this, a MIMO radar device in which each of a plurality of receivers includes a local oscillator has been developed. However, when the radar device is powered on, the local oscillation signals output from the local oscillators of a plurality of receivers are not in phase. Thus, when the radar device is powered on, it is necessary to detect the phase difference of the received signals and correct the phases of the received signals.

BRIEF DESCRIPTION OF THE DRAWINGS

FIG. 1 is a block diagram showing an example of a radar device according to a first arrangement.
FIG. 2 is a block diagram for explaining an example of a MIMO radar unit according to the first arrangement.
FIG. 3 is a block diagram for explaining an example of a transmitter/receiver module according to the first arrangement.
FIG. 4A illustrates an example of a relationship between an amplitude of a chirp signal and time according to the first arrangement.
FIG. 4B illustrates an example of a relationship between a frequency of the chirp signal and time according to the first arrangement.
FIG. 5A illustrates a relationship between a transmitted signal and time and a relationship between a received signal and time according to the first arrangement.
FIG. 5B illustrates a relationship between an intermediate frequency signal and time according to the first arrangement.
FIG. 5C illustrates a relationship between a reflection intensity and a frequency according to the first arrangement.
FIG. 6 is a diagram for explaining an example of a security system according to the first arrangement.
FIG. 7 is a block diagram for explaining an example of a MIMO radar device according to a second arrangement.
FIG. 8 is a diagram for explaining an example of a transmitter/receiver circuit according to the second arrangement.
FIG. 9 is a diagram for explaining an example of a MIMO radar device according to a third arrangement.
FIG. 10 is a diagram for explaining an example of a MIMO radar device according to a fourth arrangement.
FIG. 11 is a diagram for explaining an example of a MIMO radar device according to a fifth arrangement.
FIG. 12 is a diagram for explaining an example of a MIMO radar device according to a sixth arrangement.

DETAILED DESCRIPTION

According to one arrangement, a radar device includes an oscillator configured to generate a reference signal, a first unit group, and a second unit group. The first unit group includes a first unit configured to perform at least one of transmit and receive operations based on the reference signal and a second unit configured to perform at least one of transmit and receive operations based on the reference signal. The second unit group includes a third unit configured to perform at least one of transmit and receive operations based on the reference signal and a fourth unit configured to perform at least one of transmit and receive operations based on the reference signal. The first unit is connected to the oscillator via a first signal line configured to transmit the reference signal. The third unit is connected to the oscillator via a second signal line configured to transmit the reference signal. The second unit is connected to the first unit via a third signal line configured to transmit the reference signal. The fourth unit is connected to the third unit via a fourth signal line configured to transmit the reference signal.

First arrangement

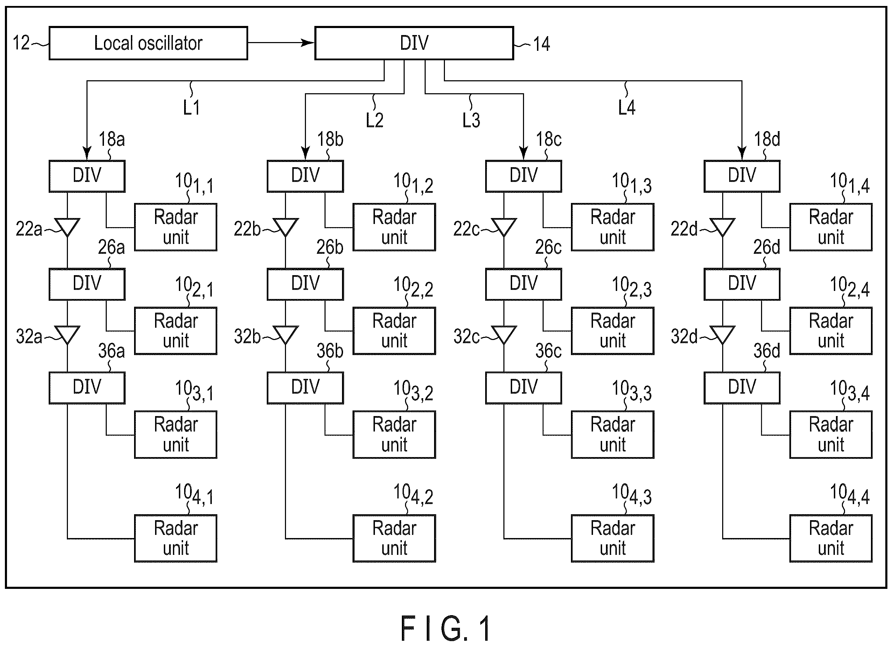

FIG. 1 is a block diagram for explaining an example of a MIMO radar device according to a first arrangement. As an application example of the radar device, there is a security system that inspects an item of an inspection target. The security system transmits an electromagnetic wave to an inspection target and receives a reflected electromagnetic wave. The security system determines whether the inspection target carries a specific item based on the intensity of the reflected electromagnetic wave. During the transmission of the electromagnetic wave, the inspection target may be walking and does not need to stay still.

The MIMO radar device includes a plurality of radar units 10. Each of a plurality of radar units 10 includes an antenna and a transmitter/receiver circuit. All of a plurality of radar units 10 do not need to include a transmitter/receiver circuit. It is sufficient that each of a plurality of radar units 10 includes at least one of a transmitter circuit and a receiver circuit. A plurality of radar units 10 includes radar units $10_{1,1}$ to $10_{4,4}$ formed on an array (for example, an array of 4 rows $\times$ 4 columns) capable of scanning the inspection target.

The MIMO radar device includes a local oscillator 12 that transmits signals to the radar units $10_{1,1}$ to $10_{4,4}$. The local oscillator 12 generates a linear frequency modulated continuous wave (L-FMCW) signal whose frequency increases linearly with time. In this specification, the L-FMCW signal is referred to as a chirp signal. Each of the radar units $10_{1,1}$ to $10_{4,4}$ transmits a chirp signal to the inspection target. Each of the radar units $10_{1,1}$ to $10_{4,4}$ receives an electromagnetic wave reflected by the inspection target and mixes the received signal with the chirp signal to generate an intermediate frequency signal.

The radar units 10 in each column constitute a group. The radar units $10_{1,1}$ to $10_{4,1}$ in the leftmost column constitute a first group. The radar units $10_{1,2}$ to $10_{4,2}$ in the second column from the left constitute a second group. The radar units $10_{1,3}$ to $10_{4,3}$ in the third column from the left constitute a third group. The radar units $10_{1,4}$ to $10_{4,4}$ in the rightmost column constitute a fourth group.

An output terminal of the local oscillator 12 is connected to an input terminal of a divider (DIV) 14 of 1-input/4-output. The local oscillator 12 and the divider 14 may be connected by a cable or a printed pattern. The divider 14 divides an input signal into four signals. The four divided signals are output from four output terminals. A first output terminal of the divider 14 is connected to an input terminal of a divider 18a of 1-input/2-output via a first signal line L1. A second output terminal of the divider 14 is connected to an input terminal of a divider 18b of 1-input/2-output via a second signal line L2. A third output terminal of the divider 14 is connected to an input terminal of a divider 18c of 1-input/2-output via a third signal line L3. A fourth output terminal of the divider 14 is connected to an input terminal of a divider 18d of 1-input/2-output via a fourth signal line L4. An amplifier may be connected between each of the first to fourth output terminals of the divider 14 and the dividers 18a to 18d. Each of the dividers 18a to 18d divides the input signal into two signals. The two divided signals are output from two output terminals.

The first signal line L1, the second signal line L2, the third signal line L3, and the fourth signal line L4 may or may not be equal in length to each other. The first signal line L1, the second signal line L2, the third signal line L3, and the fourth signal line L4 may be formed of cables or printed patterns.

A first output terminal of the divider 18a is connected to one radar unit $10_{1,1}$ among the radar units constituting the first group. A second output terminal of the divider 18a is connected to an input terminal of a divider 26a of 1-input/2-output via an amplifier 22a.

The divider 26a divides the input signal into two signals. The two divided signals are output from two output terminals. A first output terminal of the divider 26a is connected to another radar unit $10_{2,1}$ among the radar units constituting the first group. Thus, the length of the signal line for transmitting the chirp signal from the local oscillator 12 to the radar unit $10_{2,1}$ is longer than the length of the signal line for transmitting the chirp signal from the local oscillator 12 to the radar unit $10_{1,1}$. A second output terminal of the divider 26a is connected to an input terminal of a divider 36a of 1-input/2-output via an amplifier 32a.

The divider 36a divides the input signal into two signals. The two divided signals are output from two output terminals. A first output terminal of the divider 36a is connected to another radar unit $10_{3,1}$ among the radar units constituting the first group. A second output terminal of the divider 36a is connected to another radar unit $10_{4,1}$ among the radar units constituting the first group.

The signal line between the divider 18a and the radar unit $10_{1,1}$, the signal line between the divider 18a and the divider 26a, the signal line between the divider 26a and the radar unit $10_{2,1}$, the signal line between the divider 26a and the divider 36a, the signal line between the divider 36a and the radar unit $10_{3,1}$, and the signal line between the divider 36a and the radar unit $10_{4,1}$ may be formed of cables or printed patterns. When these signal lines are formed of printed patterns, the dividers 18a, 26a, and 36a may be formed of printed circuits on the printed circuit board.

A first output terminal of the divider 18b is connected to one radar unit $10_{1,2}$ among the radar units constituting the second group. A second output terminal of the divider 18b is connected to an input terminal of a divider 26b of 1-input/2-output via an amplifier 22b.

The divider 26b divides the input signal into two signals. The two divided signals are output from two output terminals. A first output terminal of the divider 26b is connected to another radar unit $10_{2,2}$ among the radar units constituting the second group. Thus, the length of the signal line for transmitting the chirp signal from the local oscillator 12 to the radar unit $10_{2,2}$ is longer than the length of the signal line for transmitting the chirp signal from the local oscillator 12 to the radar unit $10_{1,2}$. A second output terminal of the divider 26b is connected to an input terminal of a divider 36b of 1-input/2-output via an amplifier 32b.

The divider 36b divides the input signal into two signals. The two divided signals are output from two output terminals. A first output terminal of the divider 36b is connected to another radar unit $10_{3,2}$ among the radar units constituting the second group. A second output terminal of the divider 36b is connected to another radar unit $10_{4,2}$ among the radar units constituting the second group.

The signal line between the divider 18b and the radar unit $10_{1,2}$, the signal line between the divider 18b and the divider 26b, the signal line between the divider 26b and the radar unit $10_{2,2}$, the signal line between the divider 26b and the divider 36b, the signal line between the divider 36b and the radar unit $10_{3,2}$, and the signal line between the divider 36b and the radar unit $10_{4,2}$ may be formed of cables or printed patterns. When these signal lines are formed of printed patterns, the dividers 18b, 26b, and 36b may be formed of printed circuits on the printed circuit board.

A first output terminal of the divider 18c is connected to one radar unit $10_{1,3}$ among the radar units constituting the third group. A second output terminal of the divider 18c is connected to an input terminal of the divider 26c of 1-input/2-output via the amplifier 22c.

The divider 26c divides the input signal into two signals. The two divided signals are output from two output terminals. A first output terminal of the divider 26c is connected to another radar unit $10_{2,3}$ among the radar units constituting the third group. Thus, the length of the signal line for transmitting the chirp signal from the local oscillator 12 to the radar unit $10_{2,3}$ is longer than the length of the signal line for transmitting the chirp signal from the local oscillator 12 to the radar unit $10_{1,3}$. A second output terminal of the divider 26c is connected to an input terminal of a divider 36c of 1-input/2-output via an amplifier 32c.

The divider 36c divides the input signal into two signals. The two divided signals are output from two output terminals. A first output terminal of the divider 36c is connected to another radar unit $10_{3,3}$ among the radar units constituting the third group. A second output terminal of the divider 36c is connected to another radar unit $10_{4,3}$ among the radar units constituting the third group.

The signal line between the divider 18c and the radar unit $10_{1,3}$, the signal line between the divider 18c and the divider 26c, the signal line between the divider 26c and the radar unit $10_{2,3}$, the signal line between the divider 26c and the divider 36c, the signal line between the divider 36c and the radar unit $10_{3,3}$, and the signal line between the divider 36c and the radar unit $10_{4,3}$ may be formed of cables or printed patterns. When these signal lines are formed of printed patterns, the dividers 18c, 26c, and 36c may be formed of printed circuits on the printed circuit board.

A first output terminal of the divider 18d is connected to one radar unit $10_{1,4}$ among the radar units constituting the fourth group. A second output terminal of the divider 18d is connected to the input terminal of a 1-input/2-output divider 26d via an amplifier 22d.

The divider 26d divides the input signal into two signals. The two divided signals are output from two output terminals. A first output terminal of the divider 26d is connected to another radar unit $10_{2,4}$ among the radar units constituting the fourth group. Thus, the length of the signal line for transmitting the chirp signal from the local oscillator 12 to the radar unit $10_{2,4}$ is longer than the length of the signal line for transmitting the chirp signal from the local oscillator 12 to the radar unit $10_{1,4}$. A second output terminal of the divider 26d is connected to the input terminal of a divider 36d of 1-input/2-output via an amplifier 32d.

The divider 36d divides the input signal into two signals. The two divided signals are output from two output terminals. A first output terminal of the divider 36d is connected to another radar unit $10_{3,4}$ among the radar units constituting the fourth group. A second output terminal of the divider 36d is connected to another radar unit $10_{4,4}$ among the radar units constituting the fourth group.

It is not essential to include the amplifiers 22a to 22d and 32a to 32d. At least some of the amplifiers 22a to 22d and 32a to 32d may not have to be included.

The signal line between the divider 18d and the radar unit $10_{1,4}$, the signal line between the divider 18d and the divider 26d, the signal line between the divider 26d and the radar unit $10_{2,4}$, the signal line between the divider 26d and the divider 36d, the signal line between the divider 36d and the radar unit $10_{3,4}$, and the signal line between the divider 36d and the radar unit $10_{4,4}$ may be formed of cables or printed patterns. When these signal lines are formed of printed patterns, the dividers 18d, 26d, and 36d may be formed of printed circuits on the printed circuit board.

The signal line between the divider 18a and the radar unit $10_{1,1}$, the signal line between the divider 18b and the radar unit $10_{1,2}$, the signal line between the divider 18c and the radar unit $10_{1,3}$, and the signal line between the divider 18d and the radar unit $10_{1,4}$ may or may not be equal in length to each other.

The signal line between the divider 26a and the radar unit $10_{2,1}$, the signal line between the divider 26b and the radar unit $10_{2,2}$, the signal line between the divider 26c and the radar unit $10_{2,3}$, and the signal line between the divider 26d and the radar unit $10_{2,4}$ may or may not be equal in length to each other.

The signal line between the divider 36a and the radar unit $10_{3,1}$, the signal line between the divider 36b and the radar unit $10_{3,2}$, the signal line between the divider 36c and the radar unit $10_{3,3}$, and the signal line between the divider 36d and the radar unit $10_{3,4}$ may or may not be equal in length to each other.

The signal line between the divider 36a and the radar unit $10_{4,1}$, the signal line between the divider 36b and the radar unit $10_{4,2}$, the signal line between the divider 36c and the radar unit $10_{4,3}$, and the signal line between the divider 36d and the radar unit $10_{4,4}$ may or may not be equal in length to each other.

Although each group includes three dividers 18, 26, and 36 and repeats the division of a chirp signal into two, each group may include one divider of 1-input/4-output and divide a chirp signal from the divider 14 into four signals and the four divided chirp signals are supplied to the radar units in the group.

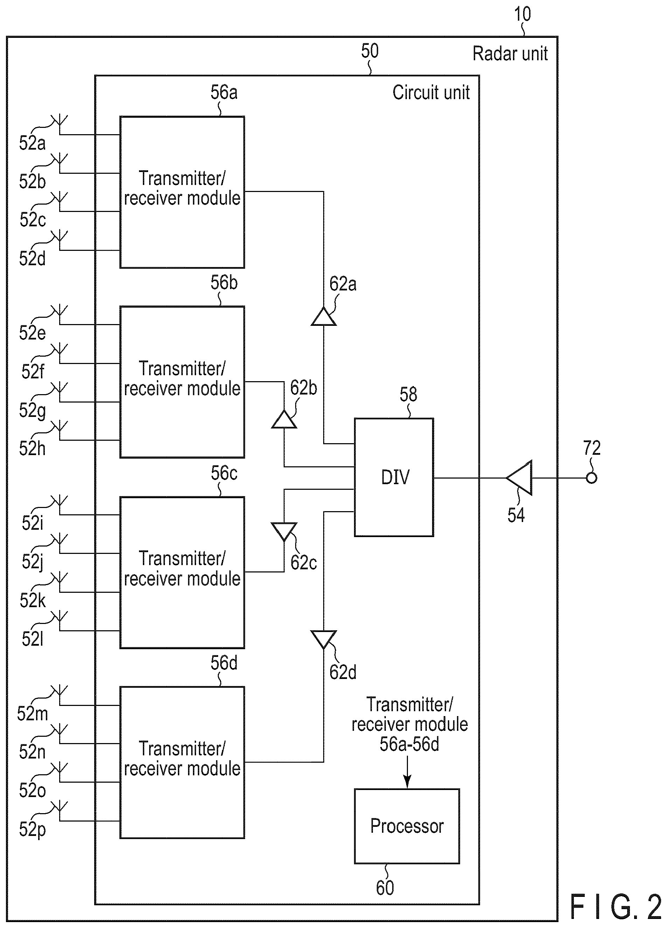

FIG. 2 is a block diagram for explaining an example of the radar unit 10 according to the first arrangement.

The radar unit 10 includes an input terminal 72, an amplifier 54, a circuit unit 50, and a plurality of, for example, 16 antennas 52a to 52p. The input terminal 72 is connected to an output terminal of the divider 18, 26, or 36 and receives a chirp signal. The chirp signal is input to the circuit unit 50 via the amplifier 54.

The circuit unit 50 includes a divider 58 of 1-input/4-output, four transmitter/receiver modules 56a, 56b, 56c, and 56d, a processor 60, and amplifiers 62a to 62d. The divider 58 divides the input signal to four signals. The four divided signals are supplied to four output terminals. A first output terminal of the divider 58 is connected to the transmitter/receiver module 56a via the amplifier 62a. A second output terminal of the divider 58 is connected to the transmitter/receiver module 56b via the amplifier 62b. A third output terminal of the divider 58 is connected to the transmitter/receiver module 56c via the amplifier 62c. A fourth output terminal of the divider 58 is connected to the transmitter/receiver module 56d via the amplifier 62d.

It is not essential to include the amplifiers 54 and 62a to 62d. At least some of the amplifiers 54 and 62a to 62d do not have to be included.

The transmitter/receiver module 56a is connected to four antennas 52a, 52b, 52c, and 52d. The transmitter/receiver module 56b is connected to four antennas 52e, 52f, 52g, and 52h. The transmitter/receiver module 56c is connected to four antennas 52i, 52j, 52k, and 52l. The transmitter/receiver module 56d is connected to four antennas 52m, 52n, 52o, and 52p.

The signal line between the input terminal 72 and the divider 58 and the signal line between the divider 58 and the transmitter/receiver modules 56a to 56d may be formed of cables. Each of the transmitter/receiver modules 56a to 56d may be formed of an integrated circuit. When each of the transmitter/receiver modules 56a to 56d is formed of an integrated circuit, the signal line between the input terminal 72 and the divider 58 and the signal line between the divider 58 and the transmitter/receiver modules 56a to 56d may be formed of printed patterns on a printed circuit board.

The lengths of the signal lines between the divider 58 and the transmitter/receiver modules 56a to 56d are equal to each other.

Output signals of the transmitter/receiver modules 56a to 56d are input to the processor 60. The processor 60 processes the input signals to generate an image signal. An operator can detect an item by observing the image. The processor 60 may process the input signals to detect an item and generate an alarm.

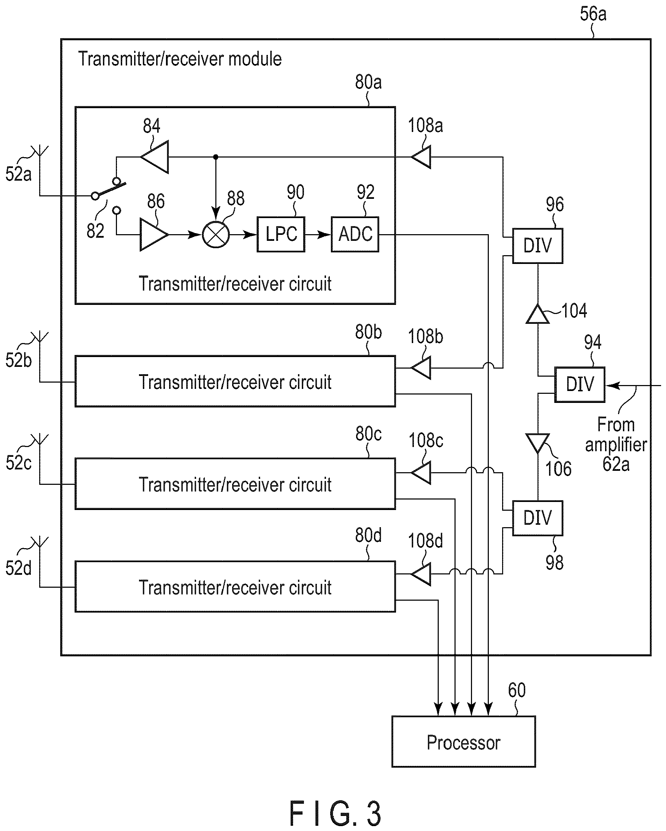

FIG. 3 is a block diagram for explaining an example of the transmitter/receiver module 56 according to the first arrangement. FIG. 3 illustrates the transmitter/receiver module 56a as an example. The transmitter/receiver module 56 includes transmitter/receiver circuits 80a, 80b, 80c, and 80d and dividers 94, 96, and 98 of 1-input/2-output. The transmitter/receiver circuits 80a to 80d have the same configuration. FIG. 3 illustrates details of the transmitter/receiver circuit 80a as an example. The chirp signal from the amplifier 62a is input to the divider 94 of 1-input/2-output. The divider 94 divides the input signal into two signals. The two divided signals are output from two output terminals. A first output terminal of the divider 94 is connected to an input terminal of a divider 96 of 1-input/2-output via an amplifier 104. A second output terminal of the divider 94 is connected to an input terminal of a divider 98 of 1-input/2-output via an amplifier 106.

The divider 96 divides the input signal into two signals. The two divided signals are output from two output terminals. A first output terminal of the divider 96 is connected to the transmitter/receiver circuit 80a via an amplifier 108a. A second output terminal of the divider 96 is connected to the transmitter/receiver module 80b via an amplifier 108b.

The divider 98 divides the input signal into two signals. The two divided signals are output from two output terminals. A first output terminal of the divider 98 is connected to the transmitter/receiver module 80c via an amplifier 108c. A second output terminal of the divider 98 is connected to the transmitter/receiver module 80d via an amplifier 108d.

Instead of the three dividers 94, 96, and 98 of 1-input/2-output, one divider of 1-input/4-output may be used.

The transmitter/receiver circuit 80a includes a selector 82, amplifiers 84 and 86, a mixer 88, a low pass filter (LPF) 90, and an analog-digital converter (ADC) 92.

The chirp signal is supplied to the antenna 52a via the amplifier 84 and the selector 82. The antenna 52a transmits an electromagnetic wave corresponding to the chirp signal to the inspection target.

A reflected electromagnetic wave from the inspection target is received by the antenna 52a. The received signal output from the antenna 52a is input to a first input terminal of the mixer 88 via the selector 82 and the amplifier 86. The chirp signal is input to a second input terminal of the mixer 88. The mixer 88 multiplies the received signal of the antenna 52a by the chirp signal to generate an intermediate frequency signal.

The intermediate frequency signal output from the mixer 88 is transmitted to the processor 60 via the LPF 90 and the ADC 92.

The transmitter/receiver circuit 80a operates as a transmitter circuit or a receiver circuit with the selector 82. A reflected wave of the electromagnetic wave transmitted from a certain radar unit 10 may be received by another radar unit 10, or a reflected wave of the electromagnetic wave transmitted from a certain radar unit 10 may be received by the certain radar unit 10.

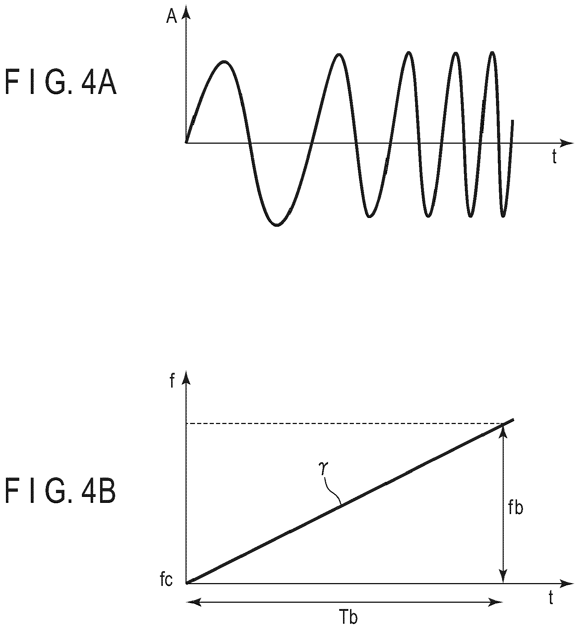

FIGS. 4A and 4B are waveform diagrams for describing an example of the chirp signal according to the first arrangement. FIG. 4A illustrates an example of the relationship between an amplitude "A" of the chirp signal and time t. FIG. 4B illustrates an example of the relationship between a frequency f of the chirp signal and the time t. As illustrated in FIG. 4B, the chirp signal is represented by a center frequency fc, a modulation bandwidth fb, and a signal time width Tb. The slope of the chirp signal is referred to as a frequency change rate (chirp rate) $\gamma$.

The transmitted signal St(t) of the chirp signal is represented by Equation 1.

$$\text{St(t)} = \cos[2\pi(fc \times t + \gamma t^2/2)] \qquad \text{Equation 1}$$

The chirp rate $\gamma$ is represented by Equation 2.

$$\gamma = fb/Tb \qquad \text{Equation 2}$$

The reflected wave from the inspection target away from the plane on which a plurality of radar units 10 is disposed by a distance R is observed with a delay of $\Delta t = 2R/c$ from the transmission timing. "c" is the speed of light. The transmitted signal Sr(t) of the chirp signal is represented by Equation 3. Here, "a" is the reflection intensity of the inspection target.

$$\text{Sr(t)} = a \times \cos[2\pi fc(t-\Delta t)+\pi\gamma(t-\Delta t)^2] \qquad \text{Equation 3}$$

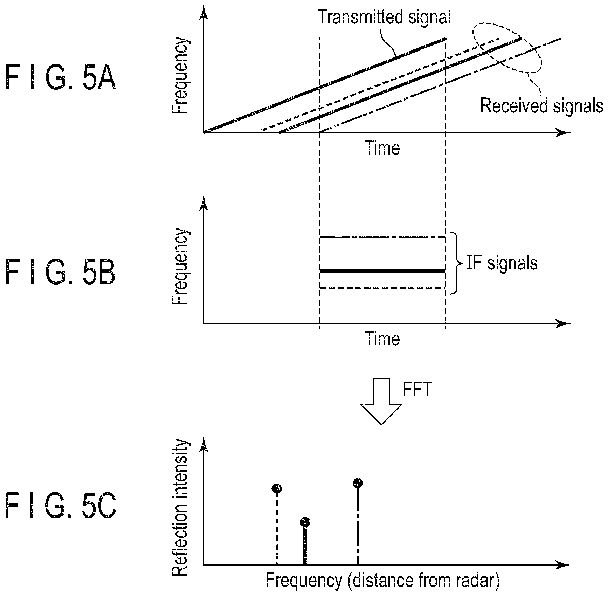

FIGS. 5A to 5C are diagrams for explaining an example of a detection operation of the radar device according to the first arrangement. FIGS. 5A to 5C illustrate a detection principle of an object in a case where there is a plurality of objects, for example, three objects. FIG. 5A illustrates the relationship between a transmitted signal and time and the relationship between a received signal and time. As illustrated in FIG. 5A, the frequency of the transmitted signal linearly changes with time. The received signal is delayed by $\Delta t$ with respect to the transmitted signal. When there is a plurality of objects, the reflected wave from the closest object indicated by the dashed line is received earliest. The reflected wave from the farthest object indicated by the alternate long and short dash line is received latest.

As illustrated in FIG. 3, the received signal is multiplied by the chirp signal by the mixer 88 to become an intermediate frequency signal z(t). The intermediate frequency signal z(t) is represented by Equation 4.

$$z(t) = a \times \cos(2\pi\Delta t\gamma t) \qquad \text{Equation 4}$$

FIG. 5B illustrates a relationship between the frequency of the intermediate frequency signal and time. Under an ideal environment without noise or the like, the frequency is constant for each reflected wave. The frequency of the intermediate frequency signal of the reflected wave from the closest object indicated by the broken line is the lowest. The frequency of the intermediate frequency signal of the reflected wave from the farthest object indicated by the alternate long and short dash line is the highest.

The processor 60 obtains the reflection intensity in the frequency domain by performing Fourier transform processing on the time-domain intermediate frequency signal z(t) represented by Equation 4. Thus, the amplitude at each point in the frequency domain as a result of the Fourier transform processing of the intermediate frequency signal corresponds to the reflection intensity for each distance from the plane on which the radar unit 10 is disposed. The frequency $f_{if}$ and the distance R have a relationship of Equation 5.

$$f_{if} = \Delta t \gamma = 2R\gamma/c \qquad \text{Equation 5}$$

FIG. 5C illustrates a relationship between the reflection intensity and the frequency obtained by performing the Fourier transform processing on the intermediate frequency signal in the time domain. In this manner, the processor 60 can obtain the reflection intensity for each distance from the radar unit 10 by obtaining the amplitude of the frequency domain signal of the intermediate frequency signal.

As the electromagnetic wave used in the arrangement, an electromagnetic wave having a wavelength of 1 mm to 30 mm may be used. An electromagnetic wave having a wavelength of 1 mm to 10 mm is referred to as a millimeter wave. An electromagnetic wave having a wavelength of 10 mm to 100 mm is referred to as a microwave. Further, an electromagnetic wave having a wavelength of 100 micrometers to 1 millimeter referred to as a terahertz wave may also be used.

The electromagnetic wave is reflected by the skin of the inspection target. The electromagnetic wave is also reflected by an item. An example of the item is metal such as a handgun or a knife. The reflectance of metal is higher than that of skin. The intensity of the metal reflected wave is higher than the intensity of the skin reflected wave. Another example of the item is powder. The electromagnetic wave is absorbed by powder such as explosives. The reflectance of powder is lower than that of skin. The intensity of the reflected wave is determined by the type of substance at the point where the electromagnetic wave is reflected, such as skin, metal, or powder. Thus, the type of the substance at the reflection point at each distance can be obtained from the intensity of the reflected wave at each distance.

Next, an application example of a MIMO radar device according to the first arrangement will be described. The application example is a security system. The security system is installed in a facility where people gather, for example, an airport, a station, a shopping mall, a concert hall, or an exhibition. The security system determines whether an inspection target (user of the facility) carries a specific item. The specific item is, for example, a dangerous item such as a metal or an explosive. The metal is a knife, a handgun, or the like. The security system irradiates an inspection target with an electromagnetic wave and receives the electromagnetic wave reflected by the inspection target. The security system determines whether the inspection target carries a specific item, for example, a dangerous item such as a metal or an explosive, based on the intensity of the reflected electromagnetic wave. The security system can also determine whether the inspection target carries a dangerous item based on the shape of the inspection target shown in an image generated based on the intensity of the reflected electromagnetic wave. During the transmission of the electromagnetic wave, the inspection target may be walking and does not need to stay still. A device that inspects a walking inspection target is referred to as a walk-through type device.

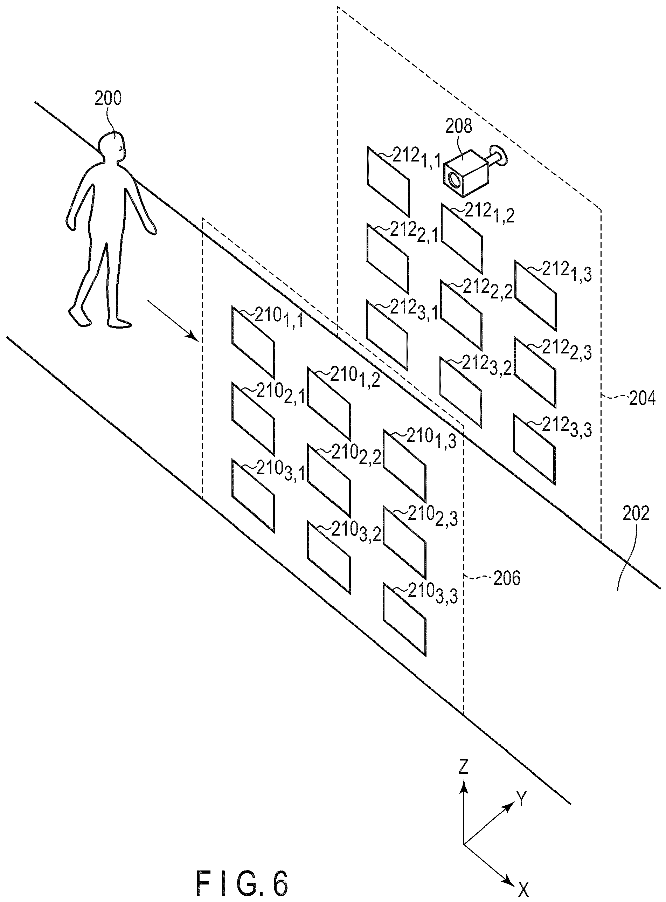

FIG. 6 is a diagram for explaining an example of the security system according to the first arrangement. FIG. 6 illustrates a walk-through type arrangement in which a person who is walking is irradiated with an electromagnetic wave. The arrangement is also applicable to a device for inspecting a person who stays still.

A plurality of radar units $210_{1,1}$, $210_{1,2}$, $210_{1,3}$, $210_{2,1}$, $210_{2,2}$, $210_{2,3}$, $210_{3,1}$, $210_{3,2}$, and $210_{3,3}$ are disposed in an array of, for example, 3 rows $\times$ 3 columns on one side wall 206 of a passage 202. A pedestrian 200 walks on the passage 202. A plurality of radar units $212_{1,1}$, $212_{1,2}$, $212_{1,3}$, $212_{2,1}$, $212_{2,2}$, $212_{2,3}$, $212_{3,1}$, $212_{3,2}$, and $212_{3,3}$ are disposed in an array of, for example, 3 rows $\times$ 3 columns on the other side wall 204 of the passage 202. The side wall 206 and the side wall 204 are planes parallel to each other. A longitudinal direction of the passage 202 is referred to as an X direction. A width direction of the passage 202 is referred to as a Y direction. A height direction of the side walls is referred to as a Z direction. Each of the radar units 210 and 212 includes the radar unit 10.

The radar unit 210 is divided into a plurality of groups. A chirp signal is supplied from one local oscillator to a plurality of groups. The chirp signal supplied to each group is transmitted between the radar units in the group. Since the chirp signal is not supplied from one local oscillator to all the radar units 210, as shown in FIG. 1, the wiring is simplified, and the radar unit 210 is thinned. The radar unit 212 is also divided into a plurality of groups. A chirp signal is supplied from one local oscillator to a plurality of groups. The chirp signal supplied to each group is transmitted between the radar units in the group. The radar unit 210 is also thinned. In a walk-through type radar device, simplification of wiring and thinning of the device are desirable.

It is not essential that a plurality of radar units 210 and 212 is respectively formed on both side walls 206 and 204. At least 2 $\times$ 2 radar units may be formed only on one side wall. The number of radar units formed on one side wall is not limited to nine. When the radar units are formed on both side walls, at least one radar unit is formed on each side wall.

The radar units 210 and 212 are not limited to be formed on the side walls, and may be formed on, for example, a ceiling, a floor surface, a gate, or the like of a facility. The radar units 210 and 212 may be formed on a movable panel or the like instead of a fixed object such as a side wall, and the movable panel may be installed around a stationary person.

A camera 208 may be attached to at least one of the side walls 204 and 206. The camera 208 captures an image of the pedestrian 200 on the passage 202. The position of the pedestrian 200 is determined based on the captured image of the camera 208. An electromagnetic wave is transmitted from the radar units 210 and 212 corresponding to the position of the pedestrian 200, and a reflected wave is received by the radar units 210 and 212 corresponding to the position of the pedestrian 200. Instead of the camera 208, a sensor capable of detecting the position of the pedestrian 200 on the passage 202 may be used. Alternatively, the position of the pedestrian 200 may be detected based on the received signals of the radar units 210 and 212 without providing the camera 208 or the sensor.

According to the radar device according to the first arrangement, the radar units 10 form a group for each column. The chirp signal from the local oscillator 12 is supplied into groups. The chirp signal supplied to each group is supplied to a first radar unit and a second divider by a first divider. The chirp signal supplied to the second divider is supplied to a second radar unit and a third divider by the second divider. Hereinafter, in the same manner, the chirp signal is supplied to the further radar units and the further dividers by the dividers. It is not necessary to supply the chirp signal from the local oscillator 12 to all the radar units via signal lines of equal length to each other. This eliminates the labor and cost of wiring signal lines of equal length between the local oscillator and each radar unit. The cost of the radar device is low.

The lengths of the transmission lines for the chirp signal between the local oscillator 12 and the radar units $10_{2,1}$ to $10_{2,4}$ in the second row among the radar units disposed in a two-dimensional array are longer than the lengths of the transmission lines for the chirp signal between the local oscillator 12 and the radar units $10_{1,1}$ to $10_{1,4}$ in the first group. In the same manner, the lengths of the transmission lines for the chirp signal between the local oscillator 12 and the radar units $10_{3,1}$ to $10_{3,4}$ in the third row among the radar units disposed in the two-dimensional array are longer than the lengths of the transmission lines for the chirp signal between the local oscillator 12 and the radar units $10_{2,1}$ to $10_{2,4}$ in the second row among the radar units disposed in the two-dimensional array. The lengths of the transmission lines for the chirp signal between the local oscillator 12 and the radar units $10_{4,1}$ to $10_{4,4}$ in the fourth row among the radar units disposed in the two-dimensional array are longer than the lengths of the transmission lines for the chirp signal between the local oscillator 12 and the radar units $10_{3,1}$ to $10_{3,4}$ in the third row among the radar units disposed in the two-dimensional array. Thus, the phases of the chirp signals are shifted in the radar units of the respective rows. The phase shift amount is small in the radar units of two adjacent rows, and is large in the radar units of two rows separated as in the first row and the fourth row.

In an application example of a MIMO radar device, for example, in a security system as illustrated in FIG. 6, when an electromagnetic wave is transmitted from a certain radar unit, the electromagnetic wave is hardly received using all the radar units. The electromagnetic wave is received using a predetermined number of radar units close to the transmitter radar unit in most cases. Thus, the phase shift amount of the chirp signal is small in the reception radar units. Some phase error is allowed depending on the application. Although a slight phase error occurs, according to the first arrangement, there is an effect of reducing labor and cost of wiring.

Second arrangement

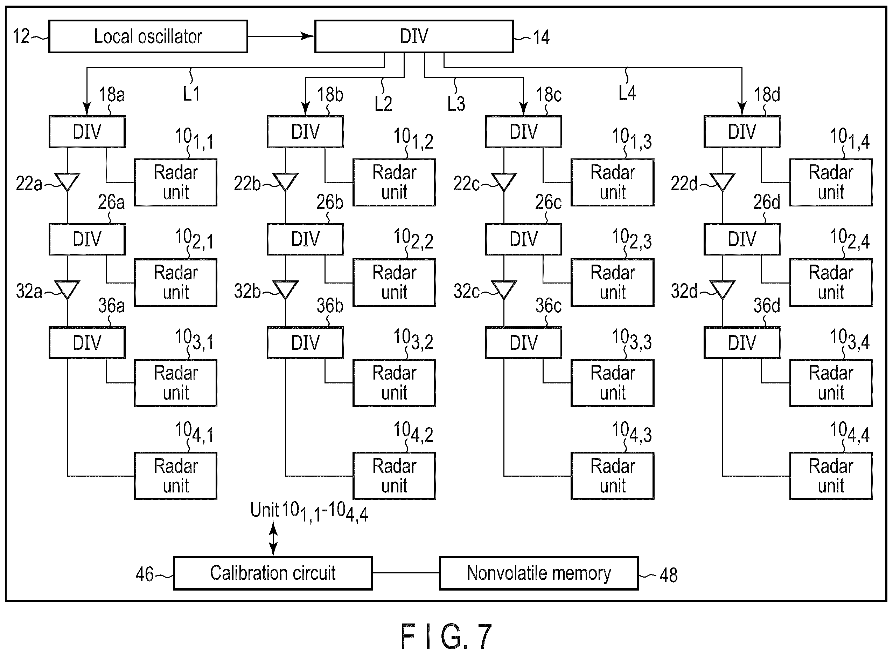

FIG. 7 is a block diagram for explaining an example of a MIMO radar device according to a second arrangement. The MIMO radar device according to the second arrangement further includes a calibration circuit 46 and a nonvolatile memory 48 as compared with the MIMO radar device according to the first arrangement illustrated in FIG. 1.

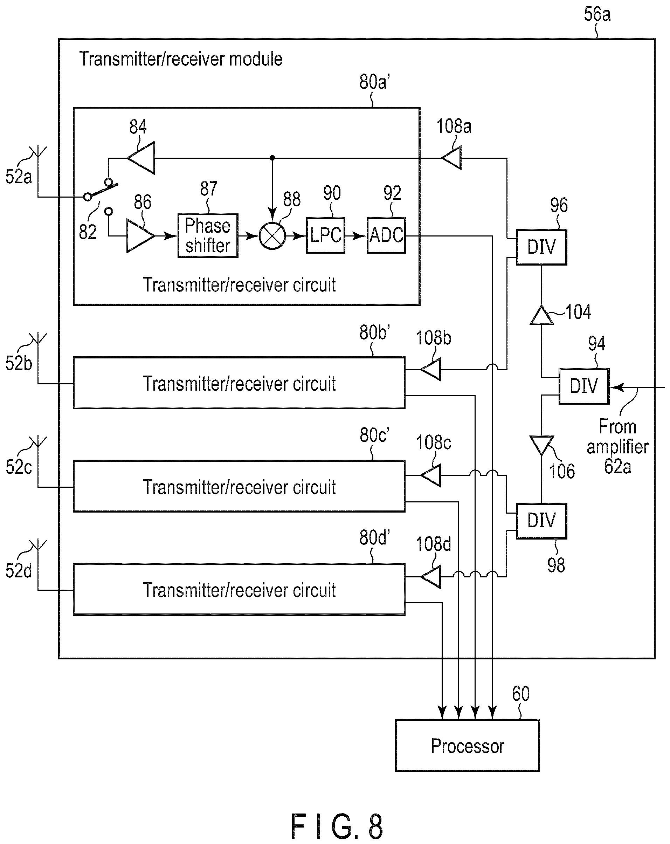

FIG. 8 is a diagram for explaining an example of a transmitter/receiver circuit 80a' according to the second arrangement. The transmitter/receiver circuit 80a' according to the second arrangement further includes a phase shifter 87 as compared with the transmitter/receiver circuit 80a according to the first arrangement illustrated in FIG. 3. The phase shifter 87 is connected between the amplifier 86 and the mixer 88. The phase shifter 87 shifts the phase of the received chirp signal.

The calibration circuit 46 is connected to all radar units $10_{1,1}$ to $10_{4,4}$. The calibration circuit 46 performs a calibration operation and a correction operation.

At the time of calibration, a corner reflector is disposed in front of the MIMO radar device. The calibration circuit 46 irradiates the corner reflector with an electromagnetic wave. The reflected wave of the corner reflector is known. The calibration circuit 46 detects a phase error of the received signal for each of antennas 52a to 52p of the radar units $10_{1,1}$ to $10_{4,4}$ based on the reflected wave from the corner reflector. The calibration circuit 46 obtains a correction value for each of the antennas 52a to 52p of the radar units $10_{1,1}$ to $10_{4,4}$ for correcting the phase error.

The calibration circuit 46 includes a memory (volatile memory) or a register. The calibration circuit 46 executes calibration once when the radar device is powered on and stores the correction value in the memory or register. While the radar device is powered on, the correction value is stored in the memory or the register. The phase shift of the signal line that transmits the chirp signal is affected by an environment such as the ambient temperature. Thus, when the environment such as the ambient temperature has not changed from that at the time of calibration, no problem is caused by correcting the phase error using the correction value stored in the memory or the register.

However, when the environment at the time of correction greatly changes from that at the time of calibration, calibration may be executed again to update the correction value.

When the radar device is powered off, the calibration circuit 46 writes the correction value stored in the memory or the register into the nonvolatile memory 48. Even when the radar device is powered off, the correction value is stored in the nonvolatile memory 48. When the radar device is powered on again, the calibration circuit 46 reads the correction value from the nonvolatile memory 48 and writes the correction value in the memory or the register. Thus, in a case where the environment hardly changes from that at the time of calibration, it is not necessary to execute calibration again at the time when the radar device is powered on.

The calibration circuit 46 may be configured to always execute calibration when the radar device is powered on. In that case, it is not necessary to include the nonvolatile memory 48.

In a case where calibration is executed always when the radar device is powered on, it is not necessary to provide the nonvolatile memory 48.

At the time of correction, the calibration circuit 46 corrects the phase of the received signal of the reflected wave from the inspection target according to the correction value. The calibration circuit 46 performs correction every time the radar device receives a reflected wave from the inspection target. At the time of correction, the calibration circuit 46 reads the correction value for each of the antennas 52a to 52p of the radar units $10_{1,1}$ to $10_{4,4}$ from the memory or the register and sets the read correction value in the phase shifter 87 in each of the transmitter/receiver circuits 80 of the radar units $10_{1,1}$ to $10_{4,4}$. The phase shifter 87 corrects the phases of the received signals of the antennas 52a to 52p of the radar units $10_{1,1}$ to $10_{4,4}$ according to the correction values. The corrected received signal is mixed with the chirp signal by the mixer 88 to obtain an intermediate frequency signal.

The MIMO radar device according to the second arrangement corrects the phase difference of the received signal even when the phase difference occurs in the chirp signal transmitted to the radar units $10_{1,1}$ to $10_{4,4}$ due to the difference in the length of the transmission line. Thus, the intermediate frequency signals can be in phase and the detection accuracy can be kept high.

Third arrangement

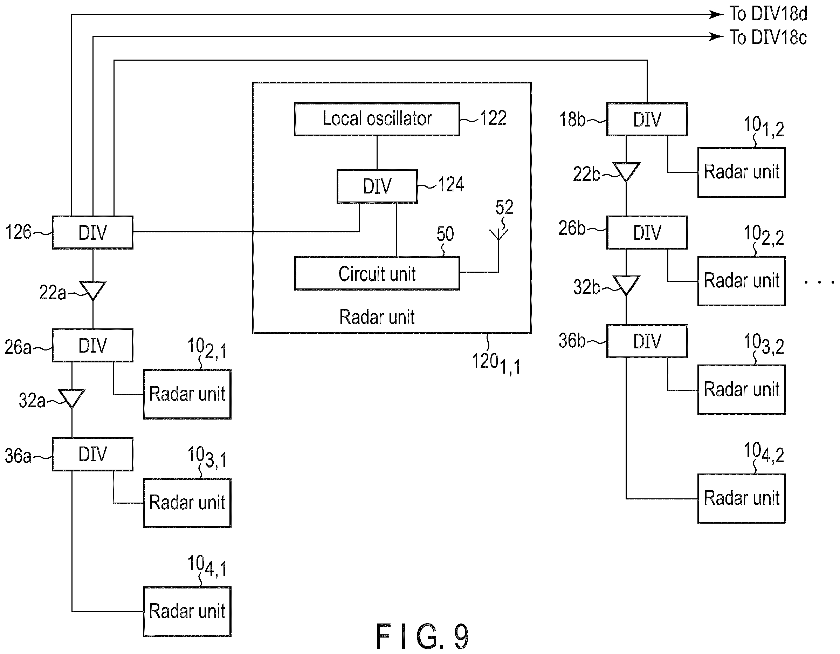

FIG. 9 is a diagram for explaining an example of a MIMO radar device according to a third arrangement. In the first arrangement and the second arrangement, the local oscillator 12 is an independent device different from the radar unit 10. The MIMO radar device according to the third arrangement does not include the independent local oscillator 12. In the third arrangement, a radar unit $120_{1,1}$ is provided instead of at least one radar unit, for example the radar unit $10_{1,1}$ among the radar units 10 according to the first arrangement or the second arrangement. The radar unit $120_{1,1}$ includes a local oscillator 122, a divider 124 of 1-input/2-output, a circuit unit 50, and an antenna 52. The local oscillator 122 corresponds to the local oscillator 12 according to the first and second arrangements. The divider 124 corresponds to the divider 14 according to the first and second arrangements. The circuit unit 50, the antenna 52, the local oscillator 122, and the divider 124 are formed on a substrate of the radar unit $120_{1,1}$.

An output terminal of the local oscillator 122 is connected to an input terminal of the divider 124. The divider 124 divides the input signal into two signals. The two divided signals are output from two output terminals. A first output terminal of the divider 124 is connected to the circuit unit 50. A second output terminal of the divider 124 is connected to an input terminal of a divider 126 of 1-input/4-output. The divider 126 divides the input signal into four signals. The divided four signals are output from four output terminals. A first output terminal of the divider 126 is connected to the input terminal of the divider 26a via the amplifier 22a. A second output terminal of the divider 126 is connected to the input terminal of the divider 18b. A third output terminal of the divider 126 is connected to the input terminal of the divider 18c. A fourth output terminal of the divider 126 is connected to the input terminal of the divider 18d.

The output signals of the divider 26a, the divider 18b, the divider 18c, and the divider 18d are processed in the same manner as in the first and second arrangements.

According to the MIMO radar device according to the third arrangement, the output signal of the local oscillator 122 provided in the radar unit $120_{1,1}$ is supplied to other radar units 10 in the same group constituted by the radar unit $120_{1,1}$ and to radar units 10 in the other groups. Thus, in addition to the effects of the first and second arrangements, effects of eliminating the need of providing the local oscillator 12 independently of the radar unit $120_{1,1}$, eliminating the need of providing wiring between the local oscillator 12 and the radar unit $120_{1,1}$, and providing a MIMO radar device having a simple configuration are exerted.

In the third arrangement, radar units 120 may be provided instead of all the radar units 10 according to the first or second arrangement, respectively. In this case as well, the output signal of the local oscillator 122 in any one of the radar units 120 is supplied to all other radar units 120.

Fourth arrangement

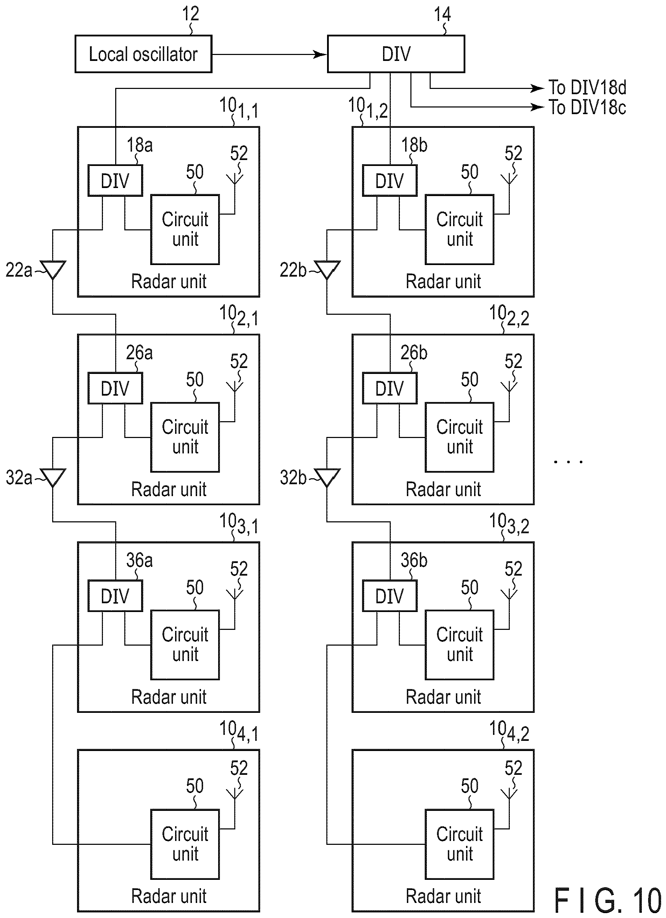

FIG. 10 is a diagram for explaining an example of a MIMO radar device according to a fourth arrangement. In the fourth arrangement, the dividers according to the first, second, and third arrangements are formed on a substrate of the radar units 10. FIG. 10 illustrates an example in which, for example, the dividers 18a to 18d, 26a to 26d, and 36a to 36d of the first and second arrangements are formed on substrates of the radar units 10. The divider 126 according to the third arrangement may also be formed on a substrate of the radar unit $120_{1,1}$. Further, the amplifiers 22a to 22d and 32a to 32d may also be formed on the substrates of the radar units 10. The signal lines connecting the radar units 10 in the same group may be formed of cables or printed patterns.

Fifth arrangement

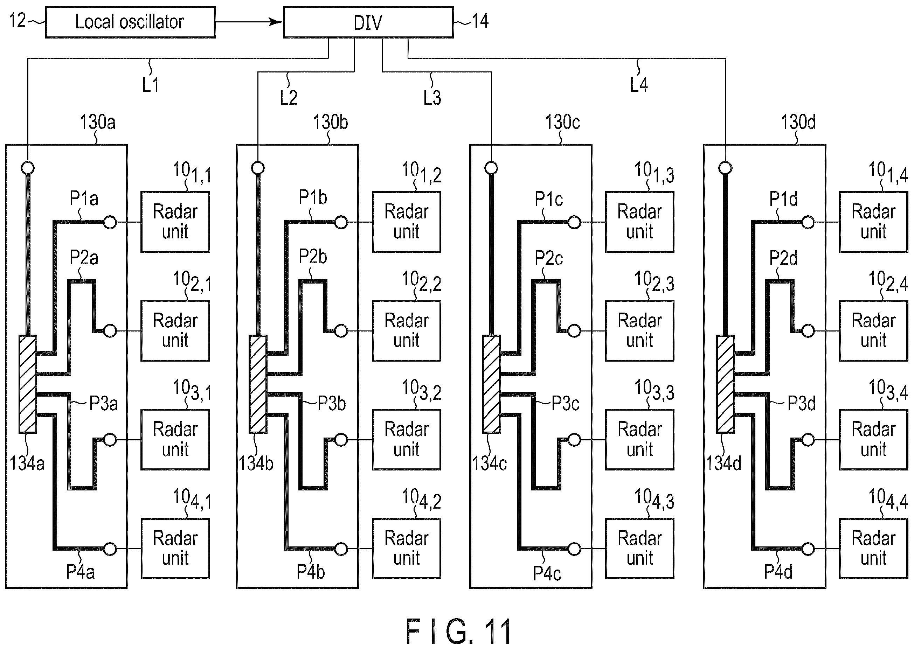

FIG. 11 is a diagram for explaining an example of a MIMO radar device according to a fifth arrangement. The fifth arrangement relates to a modification of wiring between the radar units 10 of the MIMO radar device according to the first to fourth arrangements. FIG. 11 illustrates the fifth arrangement obtained by modifying the first arrangement as an example. The radar units $10_{1,1}$ to $10_{4,1}$ constituting a first group are connected to a printed circuit board 130a. The radar units $10_{1,2}$ to $10_{4,2}$ constituting a second group are connected to a printed circuit board 130b. The radar units $10_{1,3}$ to $10_{4,3}$ constituting a third group are connected to a printed circuit board 130c. The radar units $10_{1,4}$ to $10_{4,4}$ constituting a fourth group are connected to a printed circuit board 130d. The first to fourth output terminals of the divider 14 to which the output signal of the local oscillator 12 is supplied are connected to the printed circuit boards 130a to 130d via the first to fourth signal lines L1 to L4, respectively.

The printed circuit board 130a includes printed wires P1a to P4a connected to the radar units $10_{1,1}$ to $10_{4,1}$, respectively, and a division pattern 134a that supplies the input chirp signal to the printed wires P1a to P4a. The printed circuit board 130b includes printed wires P1b to P4b connected to the radar units $10_{1,2}$ to $10_{4,2}$, respectively, and a division pattern 134b that supplies the input chirp signal to the printed wires P1b to P4b. The printed circuit board 130c includes printed wires P1c to P4c connected to the radar units $10_{1,3}$ to $10_{4,3}$, respectively, and a division pattern 134c that supplies the input chirp signal to the printed wires P1c to P4c. The printed circuit board 130d includes printed wires P1d to P4d connected to the radar units $10_{1,4}$ to $10_{4,4}$, respectively, and a division pattern 134d that supplies the input chirp signal to the printed wires P1d to P4d.

It is easy to make a plurality of printed wires on the printed circuit board 130 equal in length to each other. The printed wires P1a to P4a are equal in length to each other. Thus, in the radar units $10_{1,1}$ to $10_{4,1}$, the chirp signals are in phase. The printed wires P1b to P4b are equal in length to each other. Thus, in the radar units $10_{1,2}$ to $10_{4,2}$, the chirp signals are in phase. The printed wires P1c to P4c are equal in length to each other. Thus, in the radar units $10_{1,3}$ to $10_{4,3}$, the chirp signals are in phase. The printed wires P1d to P4d are equal in length to each other. Thus, in the radar units $10_{1,4}$ to $10_{4,4}$, the chirp signals are in phase.

The first to fourth signal lines L1 to L4 may be formed of cables or printed patterns. The first to fourth signal lines L1 to L4 may or may not be equal in length to each other.

Amplifiers may be connected between the first to fourth output terminals of the divider 14 and the division patterns 134a to 134d. Amplifiers may be connected between the first to fourth output terminals of the division patterns 134a to 134d and the radar units 10.

According to the MIMO radar device according to the fourth arrangement, the chirp signals in the radar units in the respective groups can be in phase.

In the fifth arrangement related to a modification of the second arrangement including the calibration circuit 46, when the signal lines between the divider 14 and the printed circuit boards 130a to 130d are not equal in length to each other, the calibration circuit 46 only needs to correct the phase shift of the chirp signal based on the difference in length between the signal lines. Thus, the calibration operation is simplified.

Sixth arrangement

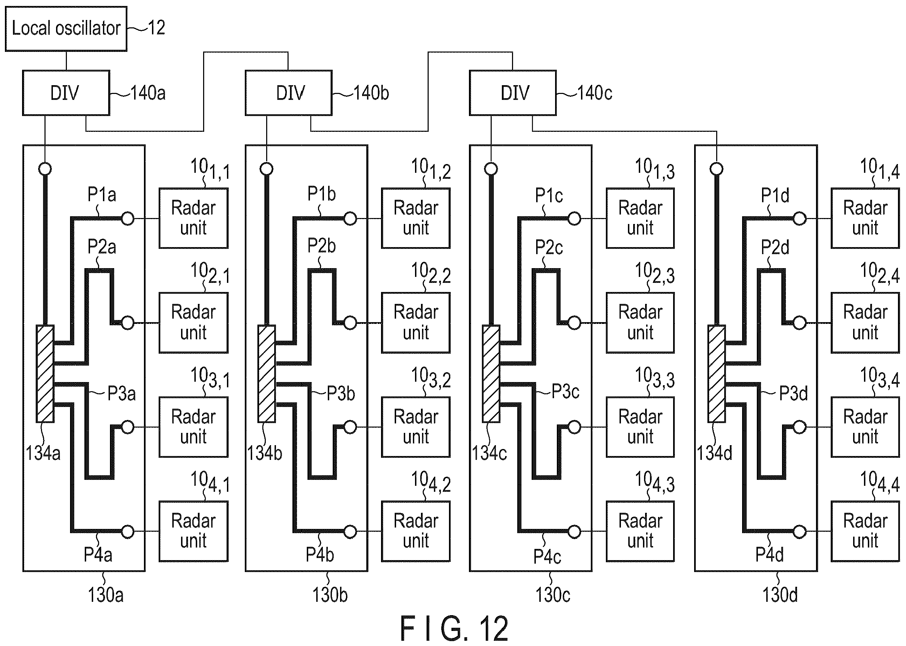

FIG. 12 is a diagram for explaining an example of a MIMO radar device according to a sixth arrangement. The sixth arrangement relates to a modification of wiring between the local oscillator 12 and the printed circuit boards 130a to 130d in the MIMO radar device according to the fifth arrangement.

The output terminal of the local oscillator 12 is connected to an input terminal of a divider 140a of 1-input/2-output. The divider 140a divides the input signal into two signals. The two divided signals are output from two output terminals. A first output terminal of the divider 140a is connected to the printed circuit board 130a and is connected to the division pattern 134a via a printed wiring on the printed circuit board 130a.

A second output terminal of the divider 140a is connected to an input terminal of a divider 140b of 1-input/2-output. The divider 140b divides the input signal into two signals. The two divided signals are output from two output terminals. A first output terminal of the divider 140b is connected to the printed circuit board 130b and is connected to the division pattern 134b via a printed wiring on the printed circuit board 130b.

A second output terminal of the divider 140b is connected to an input terminal of a divider 140c of 1-input/2-output. The divider 140c divides the input signal into two signals. The two divided signals are output from two output terminals. A first output terminal of the divider 140c is connected to the printed circuit board 130c and is connected to the division pattern 134c via a printed wiring on the printed circuit board 130c. A second output terminal of the divider 140c is connected to the printed circuit board 130d and is connected to the division pattern 134d via a printed wiring on the printed circuit board 130d.

FIGS. 11 and 12 illustrate examples in which the radar units 10 and the printed circuit boards 130 are separately formed. However, the radar units 10 and the printed circuit boards 130 may be integrally formed. The radar units 10 constituting one group may be formed on the printed circuit board 130. Instead of providing the printed circuit board 130 for each group, one printed circuit board 130 may be provided for the whole device, and all the radar units 10 may be formed on one printed circuit board 130.

While certain arrangements have been described, these arrangements have been presented by way of example only, and are not intended to limit the scope of the claims. Indeed, the radar device described herein may be embodied in a variety of other forms; furthermore, various omissions, substitutions, and changes in the form of the radar device described herein may be made.

The arrangements as described above include clauses below.

Clause 1 A radar device characterized by comprising:

an oscillator configured to generate a reference signal;
a first unit group; and
a second unit group, and characterized in that the first unit group comprises:
a first unit configured to perform at least one of transmit and receive operations based on the reference signal; and
a second unit configured to perform at least one of transmit and receive operations based on the reference signal, the second unit group comprises:
a third unit configured to perform at least one of transmit and receive operations based on the reference signal; and
a fourth unit configured to perform at least one of transmit and receive operations based on the reference signal,
the first unit is connected to the oscillator via a first signal line configured to transmit the reference signal;
the third unit is connected to the oscillator via a second signal line configured to transmit the reference signal;
the second unit is connected to the first unit via a third signal line configured to transmit the reference signal; and
the fourth unit is connected to the third unit via a fourth signal line configured to transmit the reference signal.

Clause 2 The radar device of Clause 1, characterized in that a length of the first signal line is different from a length of the second signal line.

Clause 3 The radar device of Clause 1, characterized by further comprising:

a first divider configured to supply the reference signal transmitted via the first signal line to the first unit and the second unit; and
a second divider configured to supply the reference signal transmitted via the second signal line to the third unit and the fourth unit.

Clause 4 The radar device of Clause 3, characterized in that

a signal line length between the first divider and the first unit is equal to a signal line length between the first divider and the second unit; and
a signal line length between the second divider and the third unit is equal to a signal line length between the second divider and the fourth unit.

Clause 5 The radar device of Clause 4, characterized in that

the first divider and a part of the third signal line are formed on a first printed circuit board; and
the second divider and a part of the fourth signal line are formed on a second printed circuit board.

Clause 6 The radar device of Clause 1, characterized in that

the first unit group further comprises a fifth unit configured to perform at least one of transmit and receive operations based on the reference signal;
the second unit group further comprises a sixth unit configured to perform at least one of transmit and receive operations based on the reference signal;
the fifth unit is connected to the second unit via a fifth signal line configured to transmit the reference signal; and
the sixth unit is connected to the fourth unit via a sixth signal line configured to transmit the reference signal.

Clause 7 The radar device of Clause 6, characterized by further comprising:

a third divider configured to supply the reference signal transmitted via the third signal line to the second unit and the fifth unit; and
a fourth divider configured to supply the reference signal transmitted via the fourth signal line to the fourth unit and the sixth unit.

Clause 8 The radar device of Clause 1, characterized in that

the first unit group further comprises a fifth unit configured to perform at least one of transmit and receive operations based on the reference signal;
the second unit group further comprises a sixth unit configured to perform at least one of transmit and receive operations based on the reference signal; and
the radar device is characterized by further comprises:
a first divider configured to supply the reference signal transmitted via the first signal line to the first unit, the third unit, and the fifth unit; and
a second divider configured to supply the reference signal transmitted via the second signal line to the second unit, the fourth unit, and the sixth unit.

Clause 9 The radar device of Clause 8, characterized in that

a signal line length between the first divider and the first unit, a signal line length between the first divider and the third unit, and a signal line length between the first divider and the fifth unit are equal to each other, and
a signal line length between the second divider and the second unit, a signal line length between the second divider and the fourth unit, and a signal line length between the second divider and the sixth unit are equal to each other.

Clause 10 The radar device of Clause 9, characterized in that

the first divider and signal lines connected to the first, third, and fifth units are formed on a first printed circuit board; and
the second divider and signal lines connected to the second, fourth, and sixth units are formed on a second printed circuit board.

Clause 11 The radar device of Clause 1, characterized by further comprising:
a circuit board, and characterized in that the first unit and the oscillator are formed on the circuit board.
Clause 12 The radar device of any one of Clauses 1 to 11, characterized by further comprising
a correction circuit configured to correct a first phase error of the reference signal to be transmitted to the first unit, a second phase error of the reference signal to be transmitted to the second unit, a third phase error of the reference signal to be transmitted to the third unit, and a fourth phase error of the reference signal to be transmitted to the fourth unit.
Clause 13 The radar device of clause 12, Characterized in that
the correction circuit comprises:

a detection circuit; and
a phase shift circuit,
the detection circuit is configured to detect the first phase error, the second phase error, the third phase error, and the fourth phase error; and
the phase shift circuit is configured to

shift a phase of the reference signal transmitted to the first unit based on the first phase error,
shift a phase of the reference signal transmitted to the second unit based on the second phase error,
shift a phase of the reference signal transmitted to the third unit based on the third phase error, and
shift a phase of the reference signal transmitted to the fourth unit based on the fourth phase error.

Clause 14 The radar device of Clause 12, characterized by further comprising:
a nonvolatile memory configured to store the first phase error, the second phase error, the third phase error, and the fourth phase error.

**Claims**

1. A radar device **characterized by** comprising:

   an oscillator (12) configured to generate a reference signal;
   a first unit group; and
   a second unit group, and **characterized in that** the first unit group comprises:
   a first unit ($10_{1,1}$) configured to perform at least one of transmit and receive operations based on the reference signal; and
   a second unit ($10_{2,1}$) configured to perform at least one of transmit and receive operations based on the reference signal,
   the second unit group comprises:
   a third unit ($10_{1,2}$) configured to perform at least one of transmit and receive operations based on the reference signal; and
   a fourth unit ($10_{2,2}$) configured to perform at least one of transmit and receive operations based on the reference signal,
   the first unit ($10_{1,1}$) is connected to the oscillator (12) via a first signal line (L1) configured to transmit the reference signal;
   the third unit ($10_{1,2}$) is connected to the oscillator (12) via a second signal line (L2) configured to transmit the reference signal;
   the second unit ($10_{2,1}$) is connected to the first unit ($10_{1,1}$) via a third signal line configured to transmit the reference signal; and
   the fourth unit ($10_{2,2}$) is connected to the third unit ($10_{1,2}$) via a fourth signal line configured to transmit the reference signal.

2. The radar device of claim 1, **characterized in that** a length of the first signal line (L1) is different from a length of the second signal line (L2).

3. The radar device of claim 1, **characterized by** further comprising:

   a first divider (18a) configured to supply the reference signal transmitted via the first signal line (L1) to the first unit ($10_{1,1}$) and the second unit ($10_{2,1}$); and
   a second divider (18b) configured to supply the reference signal transmitted via the second signal line (L2) to the third unit ($10_{1,2}$) and the fourth unit ($10_{2,2}$).

4. The radar device of claim 3, **characterized in that**

   a signal line length between the first divider (18a) and the first unit ($10_{1,1}$) is equal to a signal line length between the first divider (18a) and the second unit ($10_{2,1}$); and
   a signal line length between the second divider (18b) and the third unit ($10_{1,2}$) is equal to a signal line length between the second divider (18b) and the fourth unit ($10_{2,2}$).

5. The radar device of claim 4, **characterized in that**

   the first divider (18a) and a part of the third signal line are formed on a first printed circuit board; and
   the second divider (18b) and a part of the fourth signal line are formed on a second printed circuit board.

6. The radar device of claim 1, **characterized in that**

   the first unit group further comprises a fifth unit ($10_{3,1}$) configured to perform at least one of transmit and receive operations based on the reference signal;
   the second unit group further comprises a sixth unit ($10_{3,2}$) configured to perform at least one of transmit and receive operations based on the reference signal;
   the fifth unit ($10_{3,1}$) is connected to the second unit ($10_{2,1}$) via a fifth signal line configured to transmit the reference signal; and
   the sixth unit ($10_{3,2}$) is connected to the fourth unit ($10_{2,2}$) via a sixth signal line configured to transmit the reference signal.

**7.** The radar device of claim 6, **characterized by** further comprising:

a third divider (26a) configured to supply the reference signal transmitted via the third signal line to the second unit ($10_{2,1}$) and the fifth unit ($10_{3,1}$); and
a fourth divider (26b) configured to supply the reference signal transmitted via the fourth signal line to the fourth unit ($10_{2,2}$) and the sixth unit ($10_{3,2}$).

**8.** The radar device of claim 1, **characterized in that**

the first unit group further comprises a fifth unit ($10_{3,1}$) configured to perform at least one of transmit and receive operations based on the reference signal;
the second unit group further comprises a sixth unit ($10_{3,2}$) configured to perform at least one of transmit and receive operations based on the reference signal; and
the radar device is **characterized by** further comprises:
a first divider (134a) configured to supply the reference signal transmitted via the first signal line (L1) to the first unit ($10_{1,1}$), the third unit ($10_{1,2}$), and the fifth unit ($10_{3,1}$); and
a second divider (134b) configured to supply the reference signal transmitted via the second signal line (L2) to the second unit ($10_{2,1}$), the fourth unit ($10_{2,2}$), and the sixth unit ($10_{3,2}$).

**9.** The radar device of claim 8, **characterized in that**

a signal line length between the first divider (134a) and the first unit ($10_{1,1}$), a signal line length between the first divider (134a) and the third unit ($10_{1,2}$), and a signal line length between the first divider (134a) and the fifth unit ($10_{3,1}$) are equal to each other, and
a signal line length between the second divider (134b) and the second unit ($10_{2,1}$), a signal line length between the second divider (134b) and the fourth unit ($10_{2,2}$), and a signal line length between the second divider (134b) and the sixth unit ($10_{3,3}$) are equal to each other.

**10.** The radar device of claim 9, **characterized in that**

the first divider (134a) and signal lines connected to the first, third, and fifth units ($10_{1,1}$, $10_{1,2}$, $10_{3,1}$) are formed on a first printed circuit board (130a); and
the second divider (134b) and signal lines connected to the second, fourth, and sixth units ($10_{2,1}$, $10_{2,2}$, $10_{3,2}$) are formed on a second printed circuit board (130b).

**11.** The radar device of claim 1, **characterized by** further comprising:
a circuit board, and **characterized in that** the first unit ($120_{1,1}$) and the oscillator (122) are formed on the circuit board.

**12.** The radar device of any one of claims 1 to 11, **characterized by** further comprising
a correction circuit (46) configured to correct a first phase error of the reference signal to be transmitted to the first unit ($10_{1,1}$), a second phase error of the reference signal to be transmitted to the second unit ($10_{2,1}$), a third phase error of the reference signal to be transmitted to the third unit ($10_{1,2}$), and a fourth phase error of the reference signal to be transmitted to the fourth unit ($10_{2,2}$).

**13.** The radar device of claim 12, **characterized in that**
the correction circuit (46) comprises:

a detection circuit; and
a phase shift circuit (87),
the detection circuit is configured to detect the first phase error, the second phase error, the third phase error, and the fourth phase error; and
the phase shift circuit (87) is configured to

shift a phase of the reference signal transmitted to the first unit ($10_{1,1}$) based on the first phase error,
shift a phase of the reference signal transmitted to the second unit ($10_{2,1}$) based on the second phase error,
shift a phase of the reference signal transmitted to the third unit ($10_{1,2}$) based on the third phase error, and
shift a phase of the reference signal transmitted to the fourth unit ($10_{2,2}$) based on the fourth phase error.

**14.** The radar device of claim 12, **characterized by** further comprising:
a nonvolatile memory (48) configured to store the first phase error, the second phase error, the third phase error, and the fourth phase error.

EP 4 407 338 A1

F I G. 1

F I G . 2

F I G. 3

F I G. 4A

F I G. 4B

F I G. 5A

F I G. 5B

F I G. 5C

F I G. 6

F I G. 7

FIG. 8

F I G. 9

F I G. 10

F I G. 11

F I G. 12

Europäisches
Patentamt

European
Patent Office

Office européen
des brevets

# EUROPEAN SEARCH REPORT

Application Number

EP 23 19 4689

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/293784 A1 (KHALID FARHAN BIN [DE] ET AL) 26 September 2019 (2019-09-26) | 1-14 | INV.<br>G01S7/03 |
| Y | * paragraphs [0037] - [0041], [0059], [0060], [0068] - [0076]; figures 5,6,16,17 * | 7,12-14 | G01S13/34<br>G01S13/87<br>G01S13/88 |
| | ----- | | |
| Y | DE 20 2018 105377 U1 (SILICON RADAR GMBH [DE]) 7 November 2018 (2018-11-07)<br>* paragraphs [0044], [0045], [0051], [0055], [0061] - [0063], [0068], [0073], [0077]; figures 1,3 * | 7,12-14 | |
| | ----- | | |

TECHNICAL FIELDS
SEARCHED      (IPC)

G01S

The present search report has been drawn up for all claims

| Place of search | Date of completion of the search | Examiner |
|---|---|---|
| Munich | 2 February 2024 | Schmelz, Christian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 19 4689

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2024

| Patent document cited in search report | Publication date | Patent family member(s) | Publication date |
|---|---|---|---|
| US 2019293784 A1 | 26-09-2019 | CN 110297217 A<br>DE 102019106030 A1<br>US 2019293784 A1 | 01-10-2019<br>26-09-2019<br>26-09-2019 |
| DE 202018105377 U1 | 07-11-2018 | NONE | |

For more details about this annex : see Official Journal of the European Patent Office, No. 12/82